# EUROPÄISCHE PATENTSCHRIFT

(11) **EP 0 507 988 B1**
(45) Veröffentlichungstag und Bekanntmachung des Hinweises auf die Patenterteilung: **31.08.1994**
(21) Anmeldenummer: 91118479.4
(22) Anmeldetag: 30.10.1991
(51) Int. Cl.: G01B 15/00, G05D 5/03

(54) **Verfahren und Einrichtung zur Querschnitts-Vermessung elektrischer Adern**
Method and apparatus for cross section measurement of electrical wires
Méthode et dispositif pour la mesure de la section transversale des conducteurs électriques

(30) Priorität: 09.04.1991 CH 1053/91
(43) Veröffentlichungstag der Anmeldung: 14.10.1992
(73) Patentinhaber: ZUMBACH ELECTRONIC AG, CH-2552 Orpund (CH)
(72) Erfinder: Salzmann, Hannes, CH-6404 Greppen (CH); Jung, Ulrich, CH-6460 Altdorf (CH); Kötter, Wilfried, CH-6468 Attinghausen (CH)
(74) Vertreter: Jaeger, Klaus, Dr.

(56) Entgegenhaltungen:
- DE-A- 2 746 837
- US-A- 3 796 874
- US-A- 4 137 028

## Beschreibung

Die Erfindung bezieht sich auf ein Verfahren zur Vermessung des Querschnitts einer elektrischen Ader, insbesondere einer Mittel- und/oder Hochspannungsader, sowie auf eine Einrichtung zur Durchführung des Verfahrens, bei welchem/welcher in einer mit entsprechenden Werkzeugen versehenen Extrusionseinrichtung auf einen Kupferleiter ein innerer Halbleiter, eine Isolierung und ein äusserer Halbleiter aufgebracht und die einzelnen Schichten der Ader in einer entsprechenden Anlage vernetzt werden.

Aus der EP-A 0 400 310 ist eine Vorrichtung zur Regelung des Aussendurchmessers einer Ader bekannt, bei welcher Vorrichtung der Aussendurchmesser des aus einem Extruder austretenden Kunststoff-Stranges mittels einer ersten Messvorrichtung unmittelbar im Anschluss an den Extruder und mit einer zweiten Messvorrichtung im Anschluss an eine Kühlstrecke gemessen und der auf diese Messart ermittelte Istdurchmesser mit dem Solldurchmesser verglichen wird. Aus den Differenz-Werten wird ein Signal gebildet und dieses zur Regelung der Drehzahl des Extruders oder zur Regelung der Abzugs-Geschwindigkeit des aus dem Extruder austretenden Kunststoff-Stranges verwendet. Mit der bekannten Vorrichtung wird lediglich der äussere Durchmesser gemessen und bei etwaigen Abweichungen der Extruder entsprechend korrigiert.

Aus der EP-A 0 387 508 ist eine Vorrichtung zum Vulkanisieren oder Vernetzen eines Ader-Stranges bekannt, welche Vorrichtung im wesentlichen einen mit einer Schauglasarmatur ausgebildeten Rohrkörper umfasst, welcher im wesentlichen die Heiz- und Kühlzone bildet.

Bei den heutigen Anforderungen an derartige Adern, insbesondere aber bei Mittel- und Hochspannungsadern mit mehreren einen Kupferleiter umgebenden Kunststoffschichten, ist es erforderlich, dass einerseits der Kupferleiter zentrisch in der Ader angeordnet ist und andererseits die einzelnen Kunststoffschichten über dem Aderumfang möglichst geringe Dickenunterschiede aufweisen, d.h., dass die einzelnen Schichten an der fertigen Ader gleichmässig verteilt sind.

Der Erfindung liegt daher die Aufgabe zugrunde, ein Verfahren und eine Einrichtung zur Durchführung des Verfahrens anzugeben, mit welchen eine exakte Messung der Dicke der Kunststoffschicht und Bestimmung der Zentrizität des Kupferleiters durchführbar sind.

Diese Aufgabe wird nach dem erfindungsgemässen Verfahren dadurch gelöst, dass die einzelnen Halbleiter- und Isolierungsschichten der aus der Extrusionseinrichtung austretenden Ader zur Ermittlung von Absorptionswerten in mindestens zwei orthogonal zur Aderachse orientierten Richtungen durchstrahlt und die derart ermittelten Werte zur Korrektur der einzelnen Schichtdicken der beiden Halbleiter sowie der Isolierung herangezogen werden.

Mit dem erfindungsgemässen Verfahren können zusätzlich zu den ermittelten Absorptionswerten auch unerwünschte Verunreinigungen oder Inhomogenitäten der von den Strahlen durchsetzten Schichten erkannt werden, so dass hiermit gleichzeitig eine optimale Qualitätssicherung erreichbar ist.

Die Einrichtung zur Durchführung des Verfahrens besteht aus einer Extrusionseinrichtung und einer zugeordneten Vernetzungseinrichtung, wobei die Extrusionseinrichtung mindestens einen mit einstellbaren Werkzeugen versehenen Spritzkopf umfasst, mittels welchem eine aus mindestens einem Kupferleiter, einem inneren Halbleiter, einer Isolierung und einem äusseren Halbleiter bestehende und in der Vernetzungseinrichtung thermisch vernetzte Ader hergestellt wird und ist dadurch gekennzeichnet, dass in Durchlaufrichtung unmittelbar hinter dem den äusseren Halbleiter aufbringenden Spritzkopf eine die einzelnen Schichtdicken der beiden Halbleiter sowie der Isolierung mit einer Strahlung durchsetzende Messeinrichtung angeordnet ist.

Weitere Merkmale der Erfindung ergeben sich aus der folgenden Beschreibung in Verbindung mit der Zeichnung und den weiteren Patentansprüchen.

Die Erfindung wird nachstehend anhand der Zeichnung beschrieben. Es zeigt:
- Fig.1: ein als Blockschaltbild dargestelltes Teilstück einer Anlage zur Herstellung von Mittel- und/oder Hochspannungsadern;
- Fig.2: eine schematisch und im Profilquerschnitt dargestellte Ader zur Erklärung der darauf gerichteten Röntgenstrahlen; und
- Fig.3: eine in grösserem Massstab und im Profilquerschnitt dargestellte Ader mit graphischer Darstellung von entsprechend ermittelten Intensitätswerten.

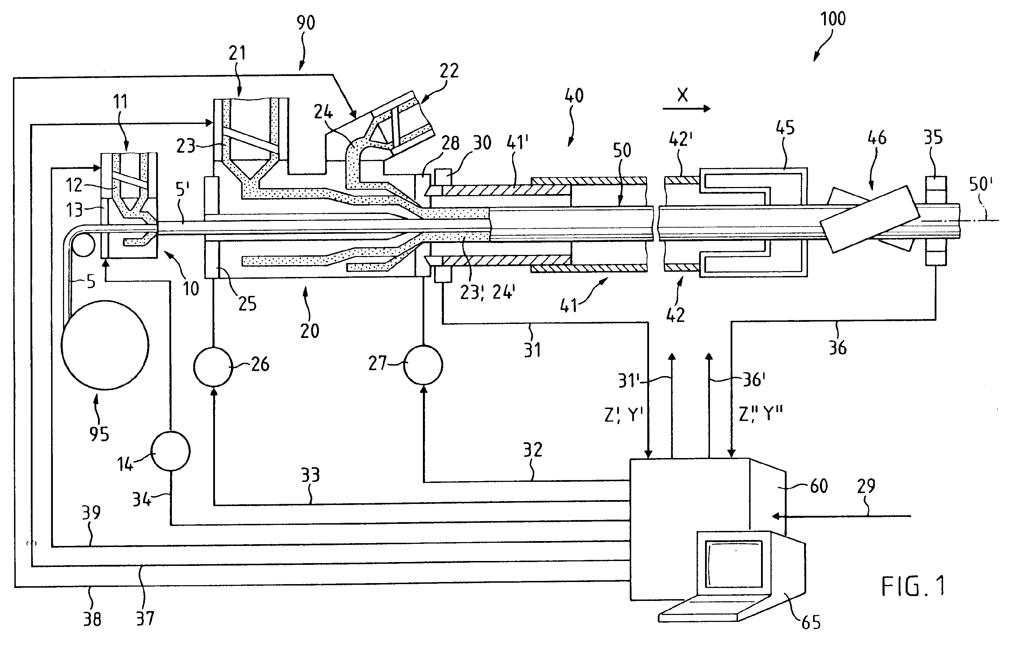

Fig.1 zeigt eine schematisch dargestellte Anlage 100 zur Herstellung von Adern, insbesondere zur Herstellung von Mittel- und/oder Hochspannungsadern. Derartige Anlagen sind an sich als sogenannte kontinuierliche Vernetzungsanlagen (CV-Anlage) bekannt.

Die als Ausführungsbeispiel dargestellte Anlage 100 umfasst im wesentlichen eine Abwickelstation 95, einen Einfachspritzkopf 10 sowie einen Doppelspritzkopf 20, eine sogenannte Vernetzungsstrecke 40 mit entsprechend zugeordneter Rohrend-Abdichtvorrichtung 45, eine Verdreh-Raupe 46 sowie eine nicht dargestellte Aufwickelstation. Die Spritzköpfe 10,20 bilden zusammen eine Extrusionseinrichtung 90, wobei jedoch auch die Möglichkeit besteht, dass die beiden Spritzköpfe 10 und 20 als eine Einheit, d.h. als Drei- oder Mehrfach-Spritzkopf, ausgebildet sind.

Bei der Anlage 100 wird mittels entsprechend angeordneter und ausgebildeter Umlenkstationen (nicht dargestellt) ein Kupferleiter 5 von der Abwickelstation 95 abgezogen und mit nicht dargestellten Mitteln dem ersten Spritzkopf 10 zugeführt.

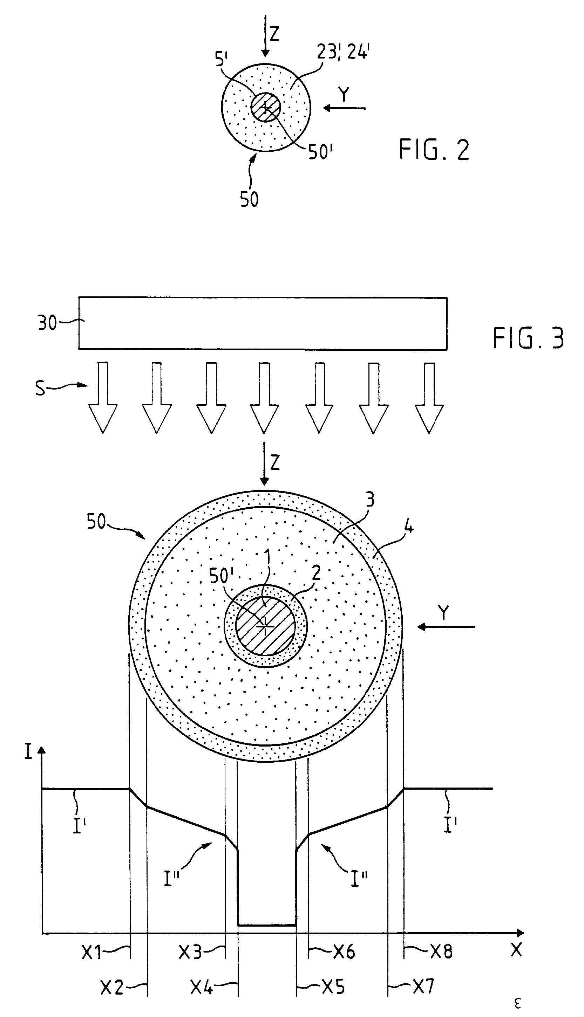

Der schematisch dargestellte erste Spritzkopf 10 umfasst einen mit 11 bezeichneten ersten Extruder, welcher mit einer entsprechend zugeordneten Zentriervorrichtung 13 in Wirkverbindung steht und zum Aufbringen eines Innenhalbleiter-Granulates 12 auf den Kupferleiter 5 ausgebildet ist. Der mit dem inneren Halbleiter 2 (Fig.3) versehene Kupferleiter 5′ wird beim Verlassen des ersten Spritzkopfes 10 dem Doppelspritzkopf 20 zugeführt.

Der Doppelspritzkopf 20 umfasst einen zweiten Extruder 21, welcher mit einer entsprechend zugeordneten Zentriervorrichtung 25 in Wirkverbindung steht und zum Aufbringen eines Isolations-Granulates 23 auf den mit dem inneren Halbleiter 2 versehenen Kupferleiter 5′ ausgebildet ist.

Von einem entsprechend zugeordneten dritten Extruder 22 des Doppelspritzkopfes 20 wird anschliessend oder gleichzeitig ein entsprechendes Aussenhalbleiter-Granulat 24 auf den mit dem Isolations-Granulat 23 versehenen Kupferleiter 5′ aufgebracht. Der dritte Extruder 22 ist mit einer entsprechend zugeordneten Zentriervorrichtung 28 wirkverbunden.

Zur Einstellung und Regelung der zum Aufbringen des entsprechenden Granulates vorzunehmenden Zentrierung steht die Zentriervorrichtung 13 des ersten Spritzkopfes 10 mit einem Stellmotor 14 und die Zentriervorrichtung 25 des Doppelspritzkopfes 20 mit einem Stellmotor 26 sowie die Zentriervorrichtung 28 mit einem Stellmotor 27 in Wirkverbindung.

Die aus dem Doppelspritzkopf 20 der Extrusionseinrichtung 90 austretende und mit den einzelnen Schichten versehene Ader 50 wird dabei mittels eines entsprechend angeordneten ersten Messgerätes 30 in bezug auf die einzelnen Schichtdicken vermessen und anschliessend durch die in der Gesamtheit mit 40 bezeichnete Vernetzungsstrecke geführt.

In Fig.1 und Fig.2 ist mit 23′ und 24′ das auf den Kupferleiter 5′ aufgebrachte Isolations- und Halbleitergranulat vor der Vernetzungsstrecke 40 bezeichnet.

Die an sich bekannte und schematisch dargestellte Vernetzungsstrecke 40 umfasst im wesentlichen und in Fertigungs- sowie Durchlaufrichtung X gesehen einen ersten Rohrkörper 41′ sowie einen zweiten Rohrkörper 42′. Auf der der Extrudereinrichtung 20 gegenüberliegenden Seite ist an dem Rohrkörper 42′ die Rohrend-Abdichtvorrichtung 45 angeordnet.

Die beiden Rohrkörper 41′,42′ sind teleskopartig miteinander verbunden, wobei in dem Rohrkörper 42′ im wesentlichen eine in der Gesamtheit mit 41 bezeichnete Heizstrecke sowie eine in der Gesamtheit mit 42 bezeichnete Kühlstrecke angeordnet sind. In der Heizstrecke 41 erfolgt bei etwa in der Grössenordnung von 200°C eine thermisch aktivierte Vernetzung, d.h. eine chemische Verbindung der Molekülketten des Isolationsmaterials und auch der Halbleitermaterialien. In der Kühlstrecke 42 wird die Ader 50 entsprechend abgekühlt.

In den an beiden Enden abgedichteten Rohrkörpern 41′,42′ wird aus produktionstechnischen Gründen vorzugsweise ein unter Druck stehender Stickstoff oder Dampf eingebracht, wobei der in den Rohrkörpern 41′,42′ vorliegende Druck vorzugsweise in der Grössenordnung von 10 bis 15 bar liegt.

Mittels der entsprechend zugeordneten Verdreher-Raupe 46 wird die Ader 50 aus fertigungstechnischen Gründen in an sich bekannter Weise im wesentlichen über die gesamte Länge der Vernetzungsstrecke 40 verdreht.

Die aus der Vernetzungsstrecke 40 austretende Ader 50 durchläuft anschliessend eine zweite Messeinrichtung 35, mittels welcher eine etwaige Exzentrizität der Ader 50 ermittelt wird.
Die in Fig.1 schematisch dargestellte Messeinrichtung 30 basiert im wesentlichen auf der an sich bekannten Röntgentechnik und ist vorzugsweise in bezug auf die Ader 50 mit nicht dargestellten Mitteln in einer Ebene senkrecht zu der Ader 50 verstell- und fixierbar.
Die Messeinrichtung 30 ist derart ausgebildet, dass mindestens ein Röntgenstrahl, vorzugsweise ein gebündelter Röntgenstrahl, orthogonal auf die Aderachse 50′ gerichtet und die eigentliche Messeinrichtung 30 zudem in eine Richtung senkrecht zur Aderachse 50′ und senkrecht zur Strahlungsrichtung verschiebbar ist, wodurch eine optimale Durchstrahlung der einzelnen Schichten erreicht wird.
Bei einer bevorzugten Ausführung wird von einem nicht dargestellten Sendegerät der Messeinrichtung 30 ein erster gebündelter Röntgenstrahl, wie in Fig.2 mit Pfeilrichtung Z dargestellt, beispielsweise orthogonal auf die Aderachse 50′ sowie ein zweiter, rechtwinklig dazu orientierter Röntgenstrahl in Pfeilrichtung Y auf die Aderachse 50′ gerichtet und jeweils von einem entsprechend zugeordneten, nicht dargestellten Empfängergerät erfasst.
Damit der gesamte Aderquerschnitt erfasst werden kann, wird die den Sender und Empfänger umfassende Messeinrichtung 30 in die Richtung senkrecht zur Aderachse 50′ und senkrecht zur Strahlungsrichtung verschoben. Die Vermessung in Pfeilrichtung Z und rechtwinklig dazu in Pfeilrichtung Y kann in der Ebene senkrecht zu der Ader 50 an beliebigen Stellen durchgeführt werden.

Von der Messeinrichtung 30 werden auf die entsprechend gemessenen Wanddicken der einzelnen Schichten bezogene Werte Z′ und Y′ über eine Leitung 31 einem Rechner 60 zugeführt und zu entsprechenden Signalen verarbeitet. Von der zweiten Messeinrichtung 35 werden auf die Exzentrizität der Schichten bezogene Werte Z",Y" über eine Leitung 36 dem Rechner 60 zugeführt und zu entsprechenden Signalen verarbeitet und beispielsweise auf einem Monitor 65 dargestellt. Die eine Messeinrichtung 30 wird über eine Leitung 31′ und die andere Messeinrichtung 35 über eine Leitung 36′ vom Rechner 60 entsprechend aktiviert.

Mittels eines geeigneten Rechner-Programms werden hinsichtlich der Wandstärke und Exzentrizität zur Korrektur der in den Spritzköpfen 10,20 vorgesehenen Werkzeuge bestimmte Sollwert-Signale erzeugt und über eine Leitung 32 dem mit der Zentriervorrichtung 28 in Wirkverbindung stehenden zweiten Stellmotor 27 und/oder über eine Leitung 33 dem mit der Zentriervorrichtung 25 in Wirkverbindung stehenden Stellmotor 26 und/oder über eine Leitung 34 dem mit der Zentriervorrichtung 13 in Wirkverbindung stehenden Stellmotor 14 zugeführt.

Über eine Leitung 29 werden dem Rechner 60 zur Einstellung der gesamten Anlage 100 entsprechende Daten zugeführt. Zur Drehzahl-Steuerung werden von dem Rechner 60 über eine Leitung 39 dem Extruder 11, über eine Leitung 37 dem Extruder 21 sowie über eine Leitung 38 dem Extruder 22 entsprechende Sollwert-Signale zugeführt.

Fig.3 zeigt in grösserem Massstab und im Profilquerschnitt die im wesentlichen den Kupferleiter 1, den inneren Halbleiter 2, die Isolierung 3 sowie den äusseren Halbleiter 4 umfassende Ader 50 mit der entsprechend zugeordneten, schematisch dargestellten Messeinrichtung 30.

Im dargestellten Ausführungsbeispiel werden von der mit einem nicht dargestellten Sendegerät und einem Empfängergerät versehenen Messeinrichtung 30 eine Anzahl in Pfeilrichtung Z orthogonal auf die Aderachse 50′ gerichtete Strahlen S abgegeben, welche die einzelnen Halbleiter- und Isolierschichten 2, 3 und 4 der Ader 50 entsprechend durchdringen.

In der graphischen Darstellung ist mit der Koordinate I eine Strahlen-Intensität und mit X eine Wegkoordinate bezeichnet. Die Grösse der vom Sendegerät abgegebenen Strahlen-Intensität (vor der Ader 50) ist mit I′ bezeichnet. Die Grösse der von der jeweiligen Halbleiter- und Isolationsschicht verringerten und vom Empfängergerät aufzunehmenden Strahlen-Intensität (hinter der Ader 50) ist mit I˝ bezeichnet. In der Figur 3 sind die sich aus den von den Halbleiter- und Isolationsschichten 2, 3 und 4 sowie von dem Kupferleiter 1 entsprechend absorbierten Strahlen-Intensitäten ergebenden Messgrössen mit X1, X2, X3, X4, X5, X6, X7 und X8 angegeben.

An dieser Stelle wird darauf hingewiesen, dass die Durchstrahlung der Ader 50 orthogonal zur Aderachse 50′ in einer Ebene senkrecht zur Ader 50 an beliebiger Stelle, wie in Fig.3 mit Pfeilrichtung Z und Y dargestellt, vorgenommen werden kann. Die Durchstrahlung kann mit gebündelten Strahlen erfolgen, wobei die Messung der Strahlen punktuell auf einer Linie erfolgen kann.

Die durchsetzende Strahlung mittels eines entsprechend ausgebildeten Röntgendetektorsystems (Röntgengerät) ist eine bevorzugte Anwendung, wobei andere Strahlensysteme und Strahlenquellen ebenfalls verwendet werden können.

## Patentansprüche

1. Verfahren zur Vermessung des Querschnitts einer aus einer Extrusionseinrichtung austretenden elektrischen Ader, insbesondere einer Mittel- und/oder Hochspannungsader, bei welchem in einer mit entsprechenden Werkzeugen versehenen Extrusionseinrichtung auf einen Kupferleiter (1) ein innerer Halbleiter (2), eine Isolierung (3) und ein äusserer Halbleiter (4) aufgebracht und die einzelnen Schichten der Ader (50) in einer entsprechenden Anlage vernetzt werden, dadurch gekennzeichnet, dass die einzelnen Halbleiter- und Isolierungsschichten der aus der Extrusionseinrichtung austretenden Ader (50) zur Ermittlung von Intensitätswerten in mindestens zwei orthogonal zur Aderachse (50′) orientierten Richtungen punktuell durchstrahlt und die derart punktuell ermittelten Werte mittels eines Rechners zur Korrektur der einzelnen Schichtdicken der beiden Halbleiter (2,4) sowie der Isolierung (3) herangezogen werden.

2. Verfahren nach Anspruch 1, dadurch gekennzeichnet, dass mit den in Abhängigkeit von den einzelnen Schichtdicken ermittelten Intensitätswerten die Korrektur der Werkzeuge in der Extrusionseinrichtung bestimmt wird.

3. Verfahren nach Anspruch 1, dadurch gekennzeichnet, dass die Ader (50) an mehreren Stellen von einer in Richtung senkrecht zur Aderachse (50′) und senkrecht zur Strahlungsrichtung (Z, Y) verschiebbaren Messeinrichtung (30) durchstrahlt wird.

4. Verfahren nach einem der Ansprüche 1 bis 3, dadurch gekennzeichnet, dass die Ader (50) zur Ermittlung der Korrekturwerte mit gebündeltem Strahlengang beaufschlagt und die Durchstrahlung punktuell gemessen wird.

5. Verfahren nach einem der Ansprüchen 1 bis 4, dadurch gekennzeichnet, dass die Ader (50) zur Ermittlung der Intensitätswerte mit einer Strahlung auf der Basis eines Röntgensystems durchsetzt wird.

6. Verfahren nach einem der Ansprüche 1 bis 5, dadurch gekennzeichnet, dass die Ader (50) in Durchlaufrichtung unmittelbar hinter der Extrusionseinrichtung durchstrahlt und im Anschluss an die thermische Vernetzung und Abkühlung bezüglich der Zentrizität vermessen wird.

7. Verfahren nach einem der Ansprüche 1, 2 und 6, dadurch gekennzeichnet, dass mit den in Abhängigkeit von den einzelnen Schichtdicken ermittelten Intensitätswerten und mit den in bezug auf die Zentrizität der Ader (50) ermittelten Werten die Korrektur der Werkzeuge in der Extrusionseinrichtung bestimmt wird.

8. Verfahren nach einem der Ansprüche 1 bis 7, dadurch gekennzeichnet, dass die von den Schichtdicken der Halbleiter (2,4) sowie der Isolierung (3) abhängigen Intensitätswerte und die von der Zentrizität der Ader (50) abhängigen Werte mit den entsprechenden Sollwerten rechnerisch verglichen und aus den Differenzen zur Korrektur der Werkzeuge herangezogen werden.

9. Verfahren nach einem der Ansprüche 1 bis 8, dadurch gekennzeichnet, dass die Drehzahlen der Extrusionseinrichtung rechnergesteuert sind.

10. Einrichtung zur Durchführung des Verfahrens nach Anspruch 1, bestehend aus einer Extrusionseinrichtung (90) und einer zugeordneten Vernetzungseinrichtung (40), wobei die Extrusionseinrichtung (90) mindestens einen mit einstellbaren Werkzeugen versehenen Spritzkopf umfasst, mittels welchem eine aus mindestens einem Kupferleiter (1), einem inneren Halbleiter (2), einer Isolierung (3) und einem äusseren Halbleiter (4) gebildete und in der Vernetzungseinrichtung (40) thermisch vernetzte Ader (50) hergestellt wird, dadurch gekennzeichnet, dass in Durchlaufrichtung unmittelbar hinter dem den äusseren Halbleiter (4) aufbringenden Spritzkopf (20) eine die einzelnen Schichtdicken der beiden Halbleiter (2,4) sowie der Isolierung (3) punktuell mit einer gebündelten Strahlung durchsetzende, verschiebbare erste Messeinrichtung (30) zur Durchstrahlung der einzelnen Schichten in mindestens zwei orthogonal zur Aderachse (50′) orientierten Richtungen angeordnet ist und dass einen Rechner (60) vorgesehen ist zur Verarbeitung der durch die Messeinrichtung (30) ermittelten Werte.

11. Einrichtung nach Anspruch 10, dadurch gekennzeichnet, dass im Abstand zu der ersten Messeinrichtung (30) hinter der Vernetzungseinrichtung (40) eine zweite, zur Bestimmung einer Exzentrizität ausgebildete Messeinrichtung (35) angeordnet ist.

## Claims

1. Process for the cross-section measurement of an electrical wire, in particular a medium-voltage and/or high-voltage wire, issuing from an extrusion device, in which an inner semi-conductor (2), an insulation (3) and an outer semi-conductor (4) are applied to a copper conductor (1) within an extrusion device equipped with appropriate tools and the individual layers of the wire (50) are cross-linked within an appropriate device, characterised in that, with a view to determining intensity values, a beam is passed pointwise in at least two directions orthogonally oriented with respect to the wire axis (50′) through the various semi-conductor and insulating layers of the wire (50) issuing from the extrusion device, and in that the values thus ascertained pointwise are used by a computer to correct the individual layer thicknesses of the two semiconductors (2, 4) and of the insulation (3).

2. Process according to Claim 1, characterised in that the correction to be applied to the tools within the extrusion device is determined by the intensity values ascertained as a function of the individual layer thicknesses.

3. Process according to Claim 1, characterised in that a measuring device (30) capable of being displaced orthogonally with respect to the wire axis (50′) and orthogonally with respect to the direction of the beam (Z, Y) passes a beam through the wire (50) at several points.

4. Process according to one of Claims 1 to 3, characterised in that, with a view to determining the correction values, the wire 50 is subjected to a focused beam and the transmitted radiation is measured in pointwise manner.

5. Process according to one of Claims 1 to 4, characterised in that, with a view to determining the intensity values, a beam generated by an X-ray system is passed through the wire (50).

6. Process according to one of Claims 1 to 5, characterised in that a beam is passed through the wire (50) in the forward direction directly downstream of the extrusion device and the centricity is measured following thermal cross-linking and cooling.

7. Process according to one of Claims 1, 2 and 6, characterised in that the correction to be applied to the tools within the extrusion device is determined by the intensity values ascertained as a function of the individual layer thicknesses and by the values ascertained with respect to the centricity of the wire (50).

8. Process according to one of Claims 1 to 7, characterised in that the intensity values depending on the layer thicknesses of the semi-conductors (2, 4) and of the insulation (3) and the values depending on the centricity of the wire (50) are compared arithmetically with the corresponding target values, the differences being used in order to determine the correction to be applied to the tools.

9. Process according to one of Claims 1 to 8, characterised in that the speeds of the extrusion device are controlled by computer.

10. Apparatus for implementing the process according to Claim 1 comprising an extrusion device (90) and an associated cross-linking device (40), whereby the extrusion device (90) comprises at least one extruder head equipped with adjustable tools by means of which a wire (50) is produced which comprises at least a copper conductor (1), an inner semi-conductor (2), an insulation (3) and an outer semi-conductor (4) and which is thermally cross-linked within the cross-linking device (40), characterised in that, in the forward direction directly downstream of the extruder head (20) applying the outer semi-conductor (4) a displaceable first measuring device (30) for passing a beam through the individual layers in at least two directions oriented orthogonally with respect to the wire axis (50′) is arranged, said first measuring device passing a focused beam pointwise through the individual layer thicknesses of the two semi-conductors (2, 4) and of the insulation (3), and in that a computer (60) is provided for processing the values ascertained by the measuring device (30).

11. Apparatus according to Claim 10, characterised in that a second measuring device (35) designed to determine eccentricity is arranged at a distance from the first measuring device (30) and downstream of the cross-linking device (40).

## Revendications

1. Procédé pour la mesure de la section transversale d'une artère de conducteur électrique sortant d'un dispositif d'extrusion, en particulier d'une artère haute et/ou moyenne tension, pour lequel dans un dispositif d'extrusion muni d'outils correspondants, il est mis en place, sur un conducteur en cuivre (1), un semi-conducteur interne (2), une isolation (3) et un semi-conducteur extérieur (4) et les différentes couches de l'artère (50) sont mouillées dans une installation correspondante, caractérisé en ce que les différentes couches d'isolation et de semi-conducteurs de l'artère (50) sortant du dispositif d'extrusion sont examinées ponctuellement par radioscopie pour la détermination de valeurs d'intensité dans au moins deux directions orientées orthogonalement par rapport à l'axe (50′) de l'artère et les valeurs relevées ponctuellement servent, au moyen d'un ordinateur, à corriger les différentes épaisseurs de couche des deux semi-conducteurs (2, 4) et de l'isolation (3).

2. Procédé selon la revendication 1, caractérisé en ce que la correction des outils dans le dispositif d'extrusion est déterminée à l'aide des valeurs d'intensité calculées en fonction des différentes épaisseurs de couche.

3. Procédé selon la revendication 1, caractérisé en ce que l'artère (50) est traversée, en plusieurs endroits, par un dispositif de mesure (30) mobile perpendiculairement en direction de l'axe (50′) de l'artère et perpendiculairement au sens de rayonnement (Z, Y).

4. Procédé selon l'une des revendications 1 à 3, caractérisé en ce qu'en vue de la détermination des valeurs de correction, l'artère (50) est englobée dans la trajectoire du faisceau des rayons et l'irradiation est mesurée ponctuellement.

5. Procédé selon l'une des revendications 1 à 4, caractérisé en ce qu'en vue de la détermination des valeurs d'intensité, l'artère (50) subit un rayonnement sur le principe d'un système radiographique à rayon X.

6. Procédé selon l'une des revendications 1 à 5, caractérisé en ce que l'artère (50) est irradiée dans le sens de passage juste derrière le dispositif d'extrusion et, par rapport au centrage, est mesurée à la suite du mouillage thermique et du refroidissement.

7. Procédé selon l'une des revendications 1, 2 et 6, caractérisé en ce que la correction des outils dans le dispositif d'extrusion est calculée à l'aide des valeurs d'intensité déterminées en fonction des différentes épaisseurs de couche et des valeurs déterminées par rapport au centrage de l'artère (50).

8. Procédé selon l'une des revendications 1 à 7, caractérisé en ce que les valeurs d'intensité dépendant des épaisseurs de couche des semi-conducteurs (2, 4) ainsi que de l'isolation (3) et les valeurs dépendant du centrage de l'artère (50) sont comparées sur ordinateur avec les valeurs de consigne correspondantes et à partir des différences sont utilisées pour la correction des outils.

9. Procédé selon l'une des revendications 1 à 8, caractérisé en ce que les vitesses de rotation du dispositif d'extrusion sont commandées par ordinateur.

10. Dispositif pour la mise en oeuvre du procédé selon la revendication 1, se composant d'un dispositif d'extrusion (90) et d'un dispositif de mouillage associé (40), le dispositif d'extrusion (90) comprenant au moins une tête d'extrudeuse équipée d'outils réglables, au moyen de laquelle il est fabriqué une artère (50) mouillée thermiquement dans le dispositif de mouillage (40) et constituée par au moins un conducteur en cuivre (1), un semi-conducteur interne (2), une isolation (3) et un semi-conducteur externe (4), caractérisé en ce qu'il est disposé, dans le sens de passage juste derrière la tête d'extrudeuse (20) amenant le semi-conducteur (4), un premier dispositif de mesure (30) mobile traversant ponctuellement, par un faisceau de rayon, les différentes épaisseurs de couche des deux semi-conducteurs (2, 4) et de l'isolation (3) en vue de l'irradiation de chacune des couches dans au moins deux directions orientées orthogonalement à l'axe (50′) de l'artère et qu'il est prévu un ordinateur (60) pour le traitement des valeurs fournies par le dispositif de mesure (30).

11. Dispositif selon la revendication 10, caractérisé en ce qu'à distance du premier dispositif de mesure (30), derrière le dispositif de mouillage (40), il est placé un second dispositif de mesure (35) destiné à déterminer une excentricité.
